# FASCICULE DE BREVET EUROPEEN

(11) **EP 2 603 126 B1**
(45) Date de publication et mention de la délivrance du brevet: **27.08.2014**
(21) Numéro de dépôt: 11749469.0
(22) Date de dépôt: 19.07.2011
(51) Int. Cl.: A47J 37/07, A47J 37/04

(54) **BARBECUE UTILISABLE, NOTAMMENT, À L'INTÉRIEUR**
GRILL, VOR ALLEM ZUR VERWENDUNG IN GESCHLOSSENEN RÄUMEN
BARBECUE PARTICULARLY FOR INDOOR USE

(30) Priorité: 12.08.2010 FR 1003347
(43) Date de publication de la demande: 19.06.2013
(73) Titulaire: Zaoui, Raymond, 75013 Paris (FR)
(72) Inventeur: Zaoui, Raymond, 75013 Paris (FR)
(74) Mandataire: Bezault, Jean
(86) Numéro de dépôt international: PCT/FR2011/000423
(87) Numéro de publication internationale: WO 2012/020180

(56) Documents cités:
- FR-A1- 2 792 516
- FR-A1- 2 840 178
- FR-A1- 2 851 445

## Description

La présente invention a pour objet un barbecue convenant, notamment, à une utilisation sur un balcon ou même à l'intérieur d'un appartement, étant entendu que rien n'interdit de l'utiliser en plein air.

Plus précisément, l'invention concerne un barbecue comportant
■ un moyen de chauffage agencé selon un plan vertical, dit "plan de référence",
■ des moyens d'immobilisation pour aliments adaptés à occuper un plan sensiblement parallèle audit plan de référence,
■ un porte-aliments composé de deux parois formant grilles ayant chacune un côté d'articulation et un côté libre opposé, lesdits côtés d'articulation étant réunis l'un à l'autre à demeure et lesdits côtés libres étant susceptibles d'être écartés l'un de l'autre pour ouverture du porte-aliments et temporairement réunis l'un à l'autre pour fermeture du porte-aliments, ledit porte-aliments comportant des projections et
■ un bac situé au-dessous dudit porte-aliments pour recueillir graisses et jus s'écoulant desdits aliments au cours de la cuisson.

Un barbecue du type indiqué ci-dessus est connu d'après FR-A-2 851 445.

Les barbecues existants de ce type ne se prêtent pas à une utilisation sur un balcon ou à l'intérieur du fait, abstraction faite des problèmes d'odeurs et de fumées, qu'ils sont encombrants et d'une utilisation malcommode.

La présente invention a pour but de remédier à ces inconvénients, but qui est atteint en ce sens que le barbecue selon l'invention est caractérisé en ce que les moyens d'immobilisation pour aliments sont constitués :
■ d'un bloc monté coulissant dans un plan perpendiculaire au plan de référence ;
■ d'un étrier ayant généralement la forme d'un U, ledit étrier étant monté rotatif, sur ledit bloc, autour d'un axe vertical, et comportant, en bout des extrémités libres des ailes du U, des moyens récepteurs pour recevoir lesdites projections, lesquelles sont prévues au niveau des côtés d'articulation du porte-aliments et adaptées à être reçues dans lesdits moyens récepteurs.

Grâce à cette structure, il est possible
(a) de faire coulisser, à l'écart du moyen de chauffage, l'ensemble que forment les moyens d'immobilisation des aliments,
(b) de faire tourner l'étrier et le porte-aliments qu'il supporte pour les orienter perpendiculairement au plan de référence,
(c) d'ouvrir le porte-aliments, d'y placer les aliments à cuire et de refermer le porte-aliments,
(d) de faire tourner, dans un sens, l'étrier et le porte-aliments qu'il supporte pour les orienter parallèlement au plan de référence,
(e) de faire coulisser, vers le moyen de chauffage, les moyens d'immobilisation des aliments chargés des aliments à cuire,
(f) de laisser cuire les aliments sur la face en vis-à-vis du moyen de chauffage,
(g) de faire de nouveau coulisser, à l'écart du moyen de chauffage, les moyens d'immobilisation des aliments, chargés d'aliments cuits sur une face,
(h) de faire tourner, dans l'autre sens, l'étrier et le porte-aliments qu'il supporte pour les orienter parallèlement au plan de référence,
(i) de faire de nouveau coulisser, vers le moyen de chauffage, les moyens d'immobilisation des aliments, chargés d'aliments à cuire sur l'autre face,
(j) de laisser cuire les aliments sur cette autre face se trouvant maintenant en vis-à-vis du moyen de chauffage, puis
(k) de faire une nouvelle fois coulisser, à l'écart du moyen de chauffage, l'ensemble que forment les moyens d'immobilisation des aliments maintenant cuits sur les deux faces,
(l) de faire tourner l'étrier et le porte-aliments qu'il supporte pour les orienter perpendiculairement au plan de référence, et
(m) d'ouvrir le porte-aliments pour en enlever les aliments cuits.

Bien entendu, rien n'interdit :
■ ni de mettre en oeuvre l'étape (a) alors que le porte-aliments n'est pas en place sur l'étrier, de garnir le porte-aliments alors qu'il est séparé des moyens d'immobilisation, puis de monter le porte-aliments garni sur l'étrier et d'enchaîner par les étapes (e) à (m) ;
■ ni de remplacer les étapes (1 et m) par l'extraction du porte-aliments de l'étrier puis par l'ouverture du porte-aliments pour en enlever les aliments.

Le barbecue comporte avantageusement
■ une première partie de logement constituée par :
   ✔ deux parois longitudinales perpendiculaires audit plan de référence,
   ✔ deux parois transversales, parallèles audit plan de référence et occupant respectivement une position distale et une position proximale par rapport à ce plan, et
   ✔ une paroi de fond horizontale, et
■ une seconde partie de logement constituée par une paroi de fond, deux parois longitudinales perpendiculaires au plan de référence et une paroi transversale supérieure également perpendiculaire audit plan de référence, ladite seconde partie de logement étant telle qu'au moins en position d'utilisation :
   ✔ ladite paroi de fond est verticale et dans le même plan que la paroi transversale distale de la première partie de logement ; et
   ✔ lesdites deux parois longitudinales sont, dans le même plan, respectivement, que les parois longitudinales de ladite première partie de logement.

Le moyen de chauffage est monté dans ladite seconde partie de logement et il s'agit avantageusement d'une résistance électrique.

Pour assurer la rotation de l'étrier des moyens d'immobilisation, il peut être prévu une tringle montée rotative entre, d'une part, ladite paroi transversale distale qui forme moyen de guidage pour cette tringle et, d'autre part, un moyen de transmission de mouvement dépendant dudit étrier, de sorte que la rotation de la tringle autour de son axe longitudinal entraîne la rotation dudit étrier autour dudit axe vertical.

Pour assurer le coulissement du bloc desdits moyens d'immobilisation, la paroi de fond de la première partie de logement peut comporter au moins un rail perpendiculaire audit plan de référence et sur lequel coulisse ledit bloc, et il peut être prévu un moyen de traction solidarisé audit bloc et coulissant au travers de perçages qui affectent ladite paroi transversale distale et guident le coulissement dudit moyen de traction.

Le bac peut être simplement posé sur l'âme de l'étrier. Pour l'immobiliser temporairement, il présente avantageusement, sur la face extérieure de sa paroi de fond, des reliefs permettant de le caler sur ladite âme.

Pour adapter l'espace compris entre les parois formant grilles dudit porte-aliments à l'épaisseur des aliments à cuire, la réunion à demeure des côtés d'articulation desdites parois se fait via au moins une paire d'anneaux allongés autorisant une rotation desdites parois pour aboutir à une application "face intérieure de paroi contre face intérieure de paroi" ou une application "face extérieure contre face extérieure" et l'une des parois a une face sensiblement plane et une face comportant des saillies adaptées à former des butées ménageant un écart entre parois dans l'application "face extérieure contre face extérieure".

Pour parfaire le maintien des aliments dans le porte-aliments, en particulier d'aliments d'épaisseur inégale, l'une au moins des parois formant grille est constituée d'un cadre sur lequel sont montés des éléments déformables à effet ressort. De la sorte, les éléments se déforment vers l'extérieur là où les aliments sont les plus épais en les serrant, toutefois, en place par effet ressort.

Dans une forme d'exécution avantageuse de l'invention, les projections que comporte ledit porte-aliments, au niveau des côtés d'articulation, appartiennent à l'une des deux parois formant grilles, les projections s'étendant dans le plan de ladite paroi et comportant une première partie perpendiculaire au côté d'articulation et une seconde partie parallèle au côté d'articulation et saillant vers l'extérieur, et les moyens récepteurs dudit étrier ont une configuration qui permet :
soit, par engagement profond desdites projections dans lesdits moyens récepteurs, l'immobilisation, en position verticale, du porte-aliments à l'état fermé ou de l'une desdites deux parois du porte-aliments à l'état ouvert,
soit, par engagement partiel desdites projections dans lesdits moyens récepteurs et pivotement autour de ladite seconde partie des projections, le pivotement, de la verticale vers l'horizontale, de l'autre desdites deux parois du porte-aliments à l'état ouvert, et le pivotement de l'horizontale vers la verticale, et inversement, dudit porte-aliments à l'état fermé..

Ainsi, l'étape (c) décrite plus haut, consistant à ouvrir le porte-aliments, y placer les aliments à cuire et à refermer le porte-aliments se décompose en fait comme suit :
c1.désactivation des moyens de fermeture temporaire du porte-aliments et pivotement jusqu'à l'horizontale de la paroi du porte-aliments qui est dépourvue de projections, l'autre paroi restant verticale,
c2.mise en place des aliments sur la paroi qui se trouve à l'horizontale,
c3.léger soulèvement du porte-aliments pour ne laisser en prise, avec les moyens récepteurs, que la seconde partie des projections et pivotement, autour de cette seconde partie, de la paroi qui était restée verticale jusqu'à ce qu'elle vienne reposer sur les aliments,
c4.réactivation des moyens de fermeture temporaire du porte-aliments et pivotement jusqu'à la verticale du porte-aliments fermé, avec les aliments à cuire qu'il contient, puis
c5.renfoncement total des projections dans les moyens récepteurs pour maintien ferme du porte-aliments dans cette position de cuisson.

De même, l'étape (m) mentionnée plus haut, à savoir d'ouverture du porte-aliments pour en enlever les aliments cuits, se décompose en :
m1.léger soulèvement du porte-aliments, renfermant les aliments cuits des deux côtés, pour ne laisser en prise avec les moyens récepteurs que la seconde partie des projections,
m2.pivotement, autour de cette seconde partie, du porte-aliments jusqu'à l'horizontale,
m3.désactivation des moyens de fermeture temporaire du porte-aliments et ouverture du porte-aliments.

Il est, par ailleurs, décrit un équipement pour barbecue du type décrit plus haut, composé :
■ d'une paire de supports pourvus de moyens récepteurs pour un porte-aliments, et
■ d'un porte-aliments composé de deux parois formant grilles ayant chacune un côté d'articulation et un côté libre opposé, lesdits côtés d'articulation étant réunis l'un à l'autre à demeure et lesdits côtés libres étant susceptibles d'être écartés l'un de l'autre pour ouverture du porte-aliments et temporairement réunis l'un à l'autre pour fermeture du porte-aliments, l'une des deux parois formant grilles comportant, au niveau des côtés d'articulation, des projections adaptées à être reçues dans lesdits moyens récepteurs, lesdites projections s'étendant dans le plan de ladite paroi et comportant une première partie perpendiculaire au côté d'articulation et une seconde partie parallèle au côté d'articulation et saillant vers l'extérieur,
les moyens récepteurs dudit étrier ayant une configuration qui permet :
soit, par engagement profond desdites projections dans lesdits moyens récepteurs, l'immobilisation, en position verticale, du porte-aliments à l'état fermé ou de l'une desdites deux parois du porte-aliments à l'état ouvert,
soit, par engagement partiel desdites projections dans lesdits moyens récepteurs et pivotement autour de ladite seconde partie des projections, le pivotement, de la verticale vers l'horizontale, de l'autre desdites deux parois du porte-aliments à l'état ouvert, et le pivotement de l'horizontale vers la verticale, et inversement, dudit porte-aliments à l'état fermé.

L'invention sera mieux comprise à la lecture de la description suivante faite en référence aux dessins annexés dans lesquels :
- la figure 1 est une vue en perspective d'une forme d'exécution du barbecue selon l'invention, les moyens d'immobilisation des aliments étant à proximité des moyens de chauffage ;
- la figure 2 est une vue semblable à la figure 1 mais avec les moyens d'immobilisation des aliments à l'écart des moyens de chauffage ;
- la figure 3 est une vue semblable à la figure 2, mais avec le bloc pivoté et le porte-aliments ouvert ;
- la figure 4 est une vue en perspective partielle, prise selon un autre angle que les figures 1-3, et montrant l'étrier, sans le porte-aliments, et en cours de rotation autour de son axe vertical ;
- la figure 4a montre, à plus grande échelle, un détail de la figure 4 ;
- la figure 5 est une vue en perspective du porte-aliments à l'état séparé,
- la figure 5a est une vue de détail d'une projection et de la zone environnante des parois du porte-aliments, dans la configuration de la figure 1 ou de la figure 2, et
- la figure 5b est une vue partielle, en perspective depuis le dessus, montrant cette même zone, mais dans une configuration où les deux parois du porte-aliments sont à l'horizontale.

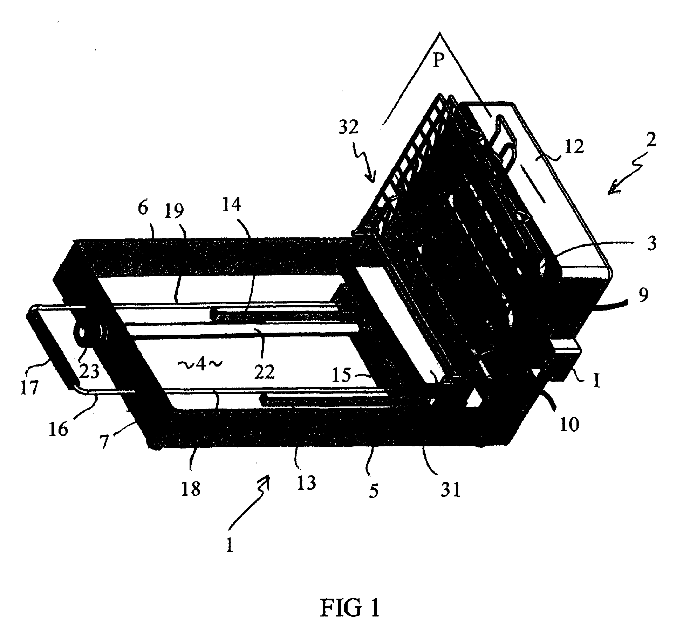

Si l'on se réfère aux figures 1 à 4, le barbecue comporte un logement revêtant grossièrement la forme d'un L couché, dont la branche longue, horizontale, constitue une première portion de logement 1 et dont la branche courte, verticale, constitue une seconde portion de logement 2. Par "horizontale" et "verticale", on fait référence à l'orientation des parties ou pièces concernées en position normale d'utilisation du barbecue.

La seconde portion de logement 2 renferme une résistance électrique 3 agencée selon un plan vertical, dit "plan de référence" P, et susceptible d'être mise sous tension par un interrupteur I.

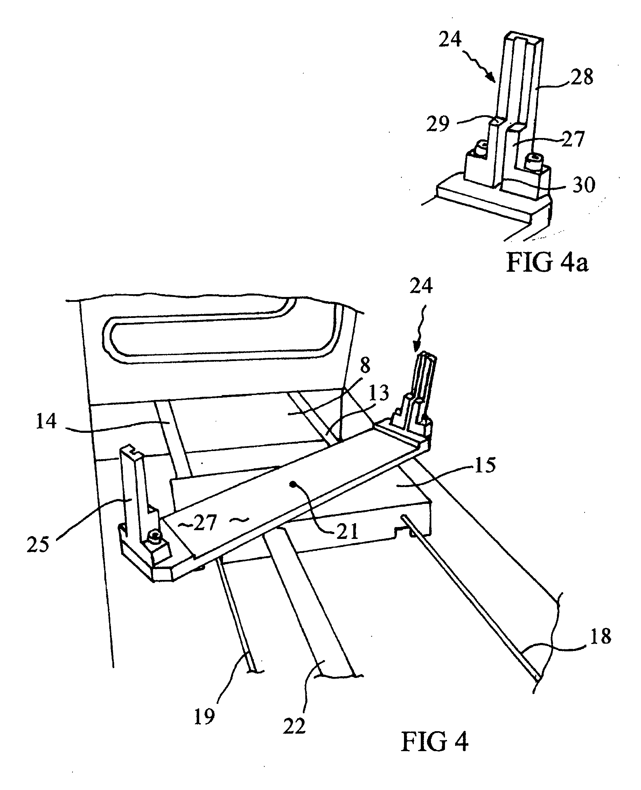

La première portion de logement 1 est définie par une paroi de fond 4, deux parois latérales 5 et 6 perpendiculaires au plan P et deux parois transversales 7 et 8 (visible à la figure 4), respectivement, distale et proximale par rapport au plan P.

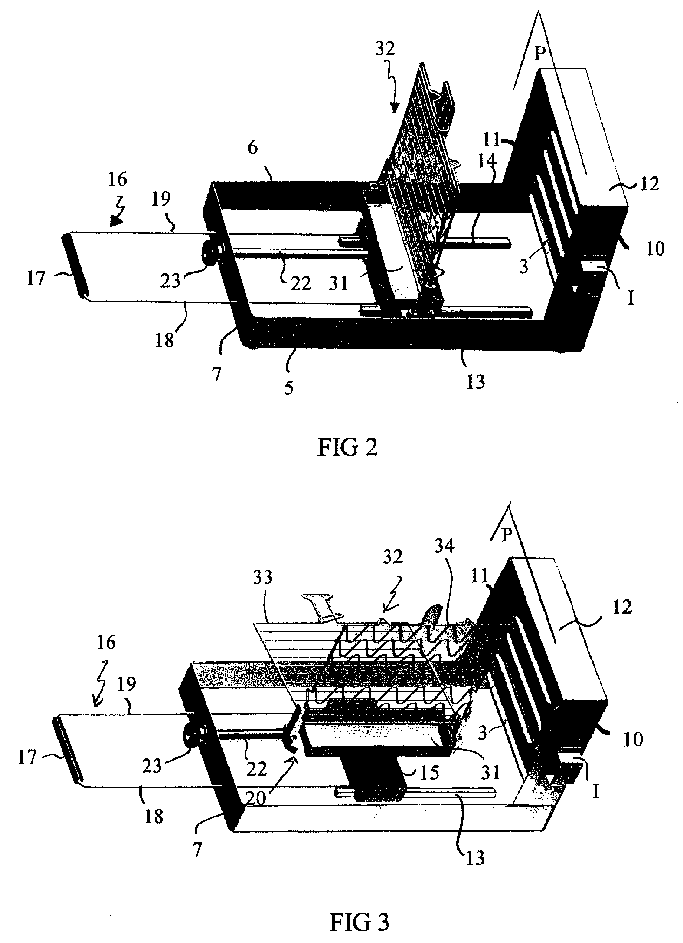

La seconde portion de logement 2 est définie par une paroi de fond 9, deux parois latérales 10 et 11 (figures 2 et 3) perpendiculaires au plan P et une paroi transversale supérieure 12.

Dans la forme d'exécution représentée, les parois latérales 10 et 11 de la seconde portion de logement 2 sont solidarisées à demeure, respectivement, aux parois latérales 5 et 6 de la première portion de logement 1 et la paroi de fond 9 de la seconde portion de logement 2 est solidarisée à demeure à la paroi de fond 4 de la première portion de logement 1.

Pour réduire l'encombrement du barbecue à des fins de stockage, ou hors des périodes d'utilisation, la seconde portion de logement 2 pourrait être indépendante de la première portion de logement 1, les deux portions étant articulées l'une sur l'autre de façon à pouvoir occuper soit la position représentée, soit une position allongée dans laquelle le plan de référence P deviendrait horizontal et les fonds 4 et 9 alignés.

Comme il ressort des figures 1 à 4, le fond 4 de la première portion de logement 1 est pourvu d'une paire de rails 13 et 14 sur lesquels un bloc 15 (mieux visible à la figure 4) est monté coulissant sous l'effet d'une tirette 16 constituée d'une pièce en U sur l'âme de laquelle est enfilée une poignée 17 et dont les ailes 18 et 19 sont solidarisées, au niveau de leur extrémité libre, audit bloc.

Un étrier 20 (figure 4), grossièrement en forme de U, est monté rotatif, autour d'un axe 21, sur le bloc 15. Cette rotation s'effectue sous l'effet d'une tringle de commande 22 dont une extrémité traverse la paroi 7 et est pourvue d'une molette 23 et dont l'autre extrémité, non visible sur les figures, attaque un mécanisme classique adapté à transformer la rotation de la tringle 22 autour de son axe (horizontal) en une rotation de l'étrier 20 autour de son axe (vertical).

On comprend que tant la tringle 22 que les ailes 18 et 19 de la tirette 16 sont maintenues et guidées par des perçages appropriés prévus dans la paroi 7.

Les ailes 24 et 25 de l'étrier 20 (figures 4 et 4a) comportent chacune une partie épaisse 26 proche de l'âme 27 de l'étrier et une partie fine 28, le passage de l'une à l'autre formant un épaulement 29. Une rainure 30 affecte la face de chaque aile 24 et 25 tournée vers l'âme 27, ladite rainure étant profonde au niveau de la partie épaisse 26 et moins profonde au niveau de la partie fine 28.

Si l'on revient aux figures 1 à 3, on voit que l'étrier supporte, d'une part, un bac 31 et, d'autre part, un porte-aliments 32.

Le bac 31 est une cuvette parallélépipédique qui est simplement posée sur l'âme 27 de l'étrier. Le bac 31 est un peu plus large que ladite âme et la face inférieure de son fond comporte au moins trois plots adaptés à venir se placer de part et d'autre, et au plus près, de l'âme de façon à caler le bac. Ce bac 31 sert à recueillir les graisses et jus de cuisson.

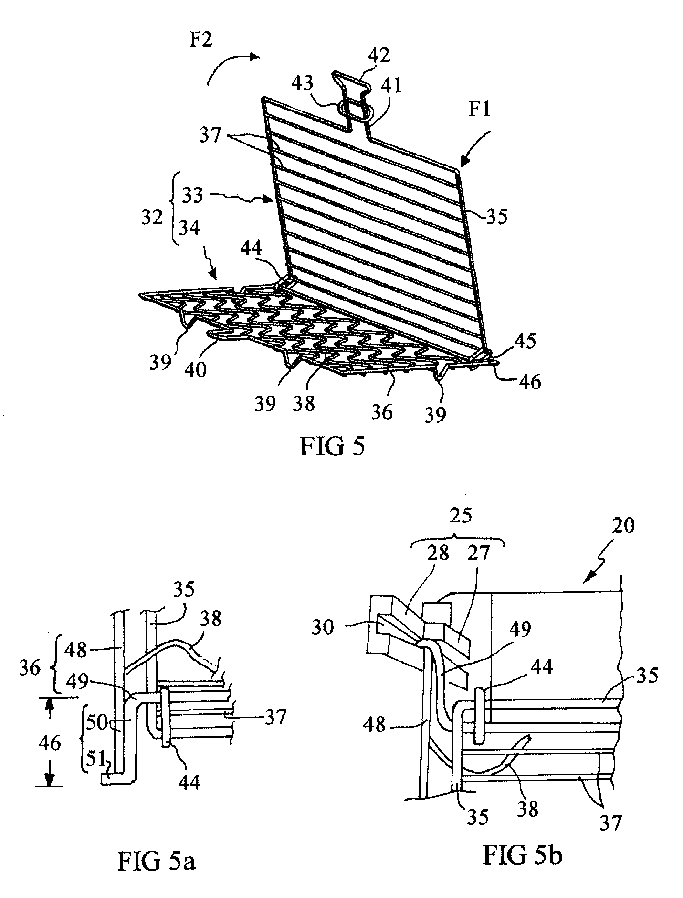

Le porte-aliments 32 est représenté en détail aux figures 5, 5a et 5b. Il est constitué de deux parois 33 et 34, chacune comprenant un cadre, respectivement, 35 et 36.

Le cadre 35 de la paroi 33 supporte une série de barreaux rectilignes tels que 37 tandis que le cadre 36 de la paroi 34 supporte une série de tiges en zigzag telles que 38 indépendantes les unes des autres et déformables avec effet ressort. Le cadre 36 détermine en outre, dans des plans orthogonaux à celui dudit cadre 36, des saillies 39 sur trois de ses côtés, toutes tournées dans le même sens, et, dans le plan du cadre 36, une boucle de connexion 40 à l'opposé du côté du cadre dépourvu de saillies.

Le cadre 35 détermine, lui, une boucle de connexion 41, dans le plan dudit cadre, boucle en forme de champignon, dont la tête 42 empêche un anneau 43 de s'échapper.

Les parois 33 et 34 sont réunies l'une à l'autre le long de leurs côtés opposés, respectivement, à la boucle 40 et à la boucle 41, ce, au moyen de deux anneaux allongés 44 et 45. On comprend qu'une fois les parois 33 et 34 rabattues l'une sur l'autre, le porte-aliments 32 peut être fermé en soulevant l'anneau 43, en appliquant la boucle 40 contre la boucle 41 et en faisant coulisser l'anneau 43 vers le pied de la projection 41, autour des deux boucles 40 et 41 accolées.

Les anneaux 44 et 45 permettent de faire pivoter les parois 33 et 34 soit selon F1, auquel cas la paroi 33, dont les deux faces sont sensiblement planes, vient s'appliquer sur la face relativement plane de la paroi 34, soit selon F2 auquel cas que le cadre 35 de la paroi 33 vient buter sur la pointe des saillies 39 de la paroi 34. Dans le premier cas l'écart entre les parois 33 et 34 sera minimal, par exemple de l'ordre de 5 mm, dans le second cas, l'écart entre les parois 33 et 34 sera maximal, par exemple de l'ordre de 2 cm, l'une ou l'autre option étant choisie en fonction de l'épaisseur des aliments à cuire. Le fait que les anneaux 44 et 45 soient allongés offre une possibilité d'écartement sensiblement égal à celui des saillies 39 pour maintenir un certain parallélisme entre les parois 33 et 34. Si les aliments ont une partie dont l'épaisseur excède l'écart maximal, cette partie poussera sur les tiges déformables 38 qui se déformeront avec, toutefois, un effet ressort.

Le cadre 36 définit, dans le plan de la paroi 34 et au voisinage des anneaux 44 et 45, deux projections, telles que 46, dont la structure est mieux visible à la figure 5a : le cadre 36 est en fait constitué de deux tiges 48 et 49 qui définissent le périmètre de la paroi 34 mais qui se prolongent en 50, à l'état juxtaposé, au-delà des angles de la paroi, l'une des tiges, en l'occurrence 49, tournant à angle droit au-delà de l'extrémité libre de la tige 48, et saillant vers l'extérieur pour former, en 51, un axe de pivotement.

Les projections 46 sont adaptées à pénétrer, respectivement, dans les rainures 30 des ailes 24,25 de l'étrier 20, comme on le voit à la figure 5b.

Le fonctionnement du barbecue selon l'invention va maintenant être décrit.

On met la résistance 3 sous tension en actionnant l'interrupteur I.

En supposant que le barbecue se trouve dans la configuration représentée à la figure 1, et qu'une petite quantité d'eau a été placée dans le bac 31 pour faciliter le lavage ultérieur et éviter les odeurs des graisses et jus de cuisson qui vont tomber des aliments au cours de la cuisson, on tire sur la tirette 16 pour faire coulisser, à l'écart de la résistance électrique 3, l'ensemble que forment le bloc 15, l'étrier 20, le bac 31 et le porte-aliments 32, pour amener le tout dans la position représentée à la figure 2.

A ce stade, les projections 46 du porte-aliments 32 sont profondément enfoncées dans les rainures 30 des ailes 24,25 de l'étrier (c'est-à-dire jusque dans la partie épaisse 26 desdites ailes).

En tournant la molette 23 dans un sens, on fait pivoter l'étrier 20 et ce qu'il supporte (le bac 31 et le porte-aliments 32), pour les orienter perpendiculairement au plan de référence P, et l'on ouvre le porte-aliments 32 en dégageant l'anneau 43 de la boucle de connexion 40, et l'on fait pivoter jusqu'à l'horizontale la paroi 33 tandis que la paroi 34 reste verticale. On obtient ainsi la configuration représentée à la figure 3.

On place les aliments à cuire sur la paroi 33 puis on soulève légèrement le porte-aliments 32 pour ne laisser en prise avec les rainures 30 que les axes 51 des projections 46, ce qui permet de faire pivoter la paroi 34 vers l'horizontale, sur les aliments (ce qui correspond à la configuration de la figure 5b). On referme le porte-aliments à l'aide de l'anneau 43 puis on fait pivoter en sens inverse, vers la verticale, le porte-aliments fermé et l'on renfonce totalement les projections 46 dans les rainures 30.

On tourne ensuite la molette 23 dans le sens inverse pour revenir à la configuration de la figure 2, puis, à l'aide de la tirette 16, on repousse le bloc 15 et tout ce qu'il supporte (étrier 20, bac 31, porte-aliments 32 garni d'aliments) vers la résistance électrique 3, revenant ainsi à la configuration de la figure 1.

Après cuisson de la face des aliments exposée à la résistance 3, on tire le bloc 15 pour le ramener dans la position illustrée à la figure 2 ; en actionnant la molette 23, on fait tourner le bloc 15 sur 180°, puis on repousse le bloc pour le ramener dans la position illustrée à la figure 1, exposant ainsi l'autre face des aliments à la résistance 3.

Après cuisson de cette autre face, on tire le bloc 15 pour l'amener de nouveau dans la position illustrée à la figure 2 ; en actionnant la molette 23, on fait tourner le bloc 15 sur 90° pour le ramener dans la position illustrée à la figure 3, après quoi on soulève le porte-aliments 32 pour ne laisser en prise avec les rainures 30 que les axes 51 des projections 46, et l'on fait pivoter le porte-aliments jusqu'à l'horizontale. On ouvre ensuite le porte-aliments 32 et enlève les aliments cuits.

Comme indiqué plus haut, bien qu'il ne s'agisse pas du mode d'utilisation préféré, on peut également placer les aliments dans le porte-aliments 32, et les en enlever, tandis que le porte-aliments est séparé de l'étrier 20, auquel cas le porte-aliments 32 peut être mis en place dans l'étrier 20, et enlevé dudit étrier, tandis que le bloc 15 et l'étrier 20 occupent la position représentée à la figure 2, la rotation du bloc 15 n'ayant plus alors l'intérêt que de permettre d'exposer successivement les deux faces des aliments à la résistance 3 sans avoir à manipuler le porte-aliments.

Le barbecue selon l'invention est compact et il permet une cuisson sans odeurs et sans fumées, ce qui le destine plus spécialement à une utilisation sur balcon ou même à l'intérieur

## Revendications

1. Barbecue comportant
■ un moyen de chauffage agencé selon un plan vertical, dit "plan de référence",
■ des moyens d'immobilisation pour aliments adaptés à occuper un plan sensiblement parallèle audit plan de référence,
■ un porte-aliments (32) composé de deux parois (33,34) formant grilles ayant chacune un côté d'articulation et un côté libre opposé, lesdits côtés d'articulation étant réunis (44,45) l'un à l'autre à demeure et lesdits côtés libres étant susceptibles d'être écartés l'un de l'autre pour ouverture du porte-aliments (32) et temporairement réunis (40-43) l'un à l'autre pour fermeture du porte-aliments, ledit porte-aliments comportant des projections (46), et
■ un bac situé au-dessous dudit porte-aliments pour recueillir graisses et jus s'écoulant desdits aliments au cours de la cuisson,
**caractérisé en ce que** lesdits moyens d'immobilisation sont constitués :
■ d'un bloc (15) monté coulissant dans un plan perpendiculaire au plan de référence (P) ;
■ d'un étrier (20) ayant généralement la forme d'un U, ledit étrier étant monté rotatif, sur ledit bloc (15), autour d'un axe vertical (21), et comportant, en bout des extrémités libres des ailes (24,25) du U, des moyens récepteurs (30) pour recevoir lesdites projections (46), et **en ce que** lesdites projections (46) sont adaptées à être reçues dans lesdits moyens récepteurs (30) et sont prévues au niveau des côtés d'articulation du porte-aliments (32).

2. Barbecue selon la revendication 1, **caractérisé en ce qu'**il comprend une première partie de logement (1) comportant :
■ deux parois longitudinales (5,6) perpendiculaires audit plan de référence (P),
■ deux parois transversales (7,8), parallèles audit plan de référence (P) et occupant respectivement une position distale et une position proximale par rapport à ce plan, et
■ une paroi de fond (4) horizontale comportant au moins un rail (13,14) perpendiculaire audit plan de référence (P) et sur lequel coulisse ledit bloc (15).

3. Barbecue selon la revendication 2, **caractérisé en ce qu'**il comporte une tringle (22) montée rotative entre, d'une part, ladite paroi transversale distale (7) qui forme moyen de guidage et, d'autre part, un moyen de transmission de mouvement dépendant dudit étrier (20), de sorte que la rotation de la tringle (22) autour de son axe longitudinal entraîne la rotation dudit étrier (20) autour dudit axe vertical (21).

4. Barbecue selon la revendication 2 ou 3, **caractérisé en ce qu'**il comporte un moyen de traction (16) solidarisé audit bloc (15) et coulissant au travers de perçages qui affectent ladite paroi transversale distale (7) et guident ledit moyen de traction (16).

5. Barbecue selon l'une quelconque des revendications 1 à 4, **caractérisé en ce que** ledit bac (31) présente, sur la face extérieure de sa paroi de fond, des reliefs permettant de caler ledit bac sur l'âme (27) dudit étrier (20).

6. Barbecue selon l'une quelconque des revendications précédentes, **caractérisé en ce que** l'une au moins des parois formant grille (34) est constituée d'un cadre (36) sur lequel sont montés des éléments déformables à effet ressort (38).

7. Barbecue selon l'une quelconque des revendications précédentes, **caractérisé en ce que** les projections (46), que comporte ledit porte-aliments (32) au niveau des côtés d'articulation, appartiennent à l'une (34) des deux parois formant grilles, les projections (46) s'étendant dans le plan de ladite paroi (34) et comportant une première partie (50) perpendiculaire au côté d'articulation et une seconde partie (51) parallèle au côté d'articulation et saillant vers l'extérieur, et **en ce que** lesdits moyens récepteurs (30) dudit étrier (20) ont une configuration qui permet :
soit, par engagement profond desdites projections (46) dans lesdits moyens récepteurs (30), l'immobilisation, en position verticale, du porte-aliments (32) à l'état fermé ou de l'une (33) desdites deux parois du porte-aliments à l'état ouvert,
soit, par engagement partiel desdites projections (46) dans lesdits moyens récepteurs et pivotement autour de ladite seconde partie (51) des projections (46), le pivotement, de la verticale vers l'horizontale, de l'autre (34) desdites deux parois du porte-aliments à l'état ouvert, et le pivotement de l'horizontale vers la verticale, et inversement, dudit porte-aliments (32) à l'état fermé.

8. Barbecue selon l'une quelconque des revendications 2 à 7, **caractérisé en ce qu'**il comporte une seconde partie de logement (2) constitué par une paroi de fond (9), deux parois longitudinales (10,11) perpendiculaires au plan de référence (P) et une paroi transversale supérieure (12) perpendiculaire audit plan de référence, ladite seconde partie de logement (2) étant telle qu'au moins en position d'utilisation :
■ ladite paroi de fond (9) est verticale et dans le même plan que la paroi transversale distale (7) de la première partie de logement (1) ; et
■ lesdites deux parois longitudinales (10,11) sont, dans le même plan, respectivement, que les parois longitudinales (5,6) de ladite première partie de logement (1),
ledit moyen de chauffage (3) étant monté dans ladite seconde partie de logement (2).

9. Barbecue selon l'une quelconque des revendications précédentes, **caractérisé en ce que** ledit moyen de chauffage (3) est une résistance électrique.

## Patentansprüche

1. Grill, der umfasst
• eine Heizeinrichtung, die entlang einer vertikalen Ebene, genannt "Referenzebene", angeordnet ist,
• Festhaltemittel für Lebensmittel, die geeignet sind, eine Ebene im Wesentlichen parallel zur Referenzebene zu besetzen,
• einen Lebensmittelträger (32), der aus zwei Seitenwänden (33, 34) zusammengesetzt ist, die Roste bilden, wobei ein jeder eine Gelenkseite und eine entgegengesetzte freie Seite aufweist, wobei die Gelenkseiten dauerhaft miteinander verbunden (44, 45) und die freien Seiten in der Lage sind, voneinander beabstandet zu werden, zum Öffnen des Lebensmittelträgers (32) und zeitweise miteinander zum Schließen des Lebensmittelträgers vereinigt sind (40-43), wobei der Lebensmittelträger Vorsprünge (46) aufweist, und
• eine Schale, die unterhalb des Lebensmittelträgers angeordnet ist, um Fette und Saft zu sammeln, der von den Lebensmitteln während des Garens abfließt, **dadurch gekennzeichnet, dass** die Festhaltemittel gebildet sind, aus:
• einem Block (15), der gleitbeweglich in einer Ebene senkrecht zur Referenzebene (P) angeordnet ist;
• einem Bügel (20), der allgemein die Form eines U aufweist, wobei der Bügel drehbar an dem Block (15) um eine vertikale Achse montiert ist und am Ende der freien Enden von Flügeln (24, 25) des U Aufnahmemittel (30) aufweist, um die Vorsprünge (46) aufzunehmen und, dass die Vorsprünge (46) in der Lage sind, in den Aufnahmemitteln (30) aufgenommen zu werden und auf der Höhe der Gelenkseiten des Lebensmittelträgers (32) vorgesehen sind.

2. Grill nach Anspruch 1, **dadurch gekennzeichnet, dass** er einen ersten Aufnahmeabschnitt (1) aufweist, der umfasst:
• zwei Längswände (5, 6), die senkrecht zur Referenzebene (P) verlaufen,
• zwei Querwände (7, 8), die parallel zur Referenzebene (P) verlaufen und eine distale bzw. proximale Position bezüglich dieser Ebene einnehmen, und
• eine horizontale Bodenwand (4), die wenigstens eine Schiene (13, 14) senkrecht zur Referenzebene (P) aufweist und auf der der Block (15) gleitet.

3. Grill nach Anspruch 2, **dadurch gekennzeichnet, dass** er eine Stange (22), die drehbeweglich zwischen der distalen Querwand (7) einerseits, die eine Führungseinrichtung bildet, und einer Bewegungsübertragungseinrichtung, andererseits, aufweist, wobei eine Bewegungsübertragungseinrichtung von dem Bügel (20) abhängt, derart, dass das Drehen der Stange (22) um ihre Längsachse eine Drehung des Bügels (20) um die vertikale Achse (21) hervorruft.

4. Grill nach Anspruch 2 oder 3, **dadurch gekennzeichnet, dass** er eine Antriebseinrichtung (16) aufweist, die mit dem Block (15) verbunden ist und durch Bohrungen gleitet, die die distale Querwand (7) beeinflussen und die Antriebseinrichtung (16) führen.

5. Grill nach einem der Ansprüche 1 bis 4, **dadurch gekennzeichnet, dass** die Schale (31) an ihrer Außenseite ihrer Bodenwand Reliefs aufweist, die ermöglichen, die Schale auf dem Steg (27) des Bügels (20) festzukeilen.

6. Grill nach einem der vorhergehenden Ansprüche, **dadurch gekennzeichnet, dass** wenigstens eine der Wände, die einen Rost (34) bildet, aus einem Rahmen (36) gebildet ist, an dem verformbare Federeffekt-Elemente (38) angebracht sind.

7. Grill nach einem der vorhergehenden Ansprüche, **dadurch gekennzeichnet, dass** die Vorsprünge (46), die der Lebensmittelträger (32) auf der Höhe der Gelenkseiten aufweist, zu einer (34) der beiden Wände, die die Roste bilden, gehören, wobei sich die Vorsprünge (46) in der Ebene der Seitenwand (34) erstrecken und einen ersten Abschnitt (50) senkrecht zur Gelenkseite und einen zweiten Abschnitt (51) parallel zur Gelenkseite und nach außen vorspringend aufweisen, und dass die Aufnahmemittel (30) der Schale (20) eine Ausgestaltung aufweisen, die erlaubt:
Entweder, durch tiefes Eingreifen der Vorsprünge (46) in die Aufnahmemittel (30), die Festlegung in vertikaler Position des Lebensmittelträgers (32) im geschlossenen Zustand oder von einer (33) der beiden Seitenwände des Lebensmittelträgers im offenen Zustand,
oder, durch teilweisen Eingriff der Vorsprünge (46) in die Aufnahmemittel und Schwenken um den zweiten Abschnitt (51) der Vorsprünge (46), das Schwenken von der Vertikalen in die Horizontale der anderen (34) der beiden Seitenwände des Lebensmittelträgers im offenen Zustand, und das Schwenken von der Horizontalen in die Vertikale und umgekehrt des Lebensmittelträgers (32) im geschlossenen Zustand.

8. Grill nach einem der Ansprüche 2 bis 7, **dadurch gekennzeichnet, dass** er einen zweiten Aufnahmeabschnitt (2), der von einer Bodenwand (9) gebildet ist, zwei Längswände (10, 11), die senkrecht zur Referenzebene (P) verlaufen und eine obere Querwand (12) aufweist, die senkrecht zur Referenzebene verläuft, wobei der zweite Aufnahmeabschnitt (2) wenigstens in der Benutzungsposition derart ist:
• die Bodenwand (9) verläuft vertikal und in der selben Ebene wie die distale Querwand (7) des ersten Aufnahmeabschnitts (1); und
• die beiden Längswände (10, 11) befinden sich entsprechend in der selben Ebene, wie die Längswände (5, 6) des ersten Aufnahmeabschnitts (1),
wobei das Heizmittel (3) im zweiten Aufnahmeabschnitt (2) angebracht sind.

9. Grill nach einem der vorhergehenden Ansprüche, **dadurch gekennzeichnet, dass** das Heizmittel (3) ein elektrischer Widerstand ist.

## Claims

1. Barbecue comprising
• a vertical heating means, termed "reference plane",
• food-immobilizing means adapted to occupy a plane substantially parallel to said reference plane,
• a food holder (32) consisting of two walls (33,34) forming grates, each having an articulation side and an opposite free side, said articulation sides being permanently joined (44,45) to one another and said free sides being capable of being moved away from one another in order to open the food holder (32) and temporarily joined (40-43) to one another in order to close the food holder, said food holder comprising projections (46), and
• a tray situated under said food holder in order to collect fat and juices coming from said food during cooking,
**characterized in that** said immobilizing means consist:
• of a block (15) mounted so as to be able to slide in a plane perpendicular to the reference plane (P);
• of a yoke (20) which is generally U-shaped and is mounted on said block (15) so as to be able to rotate about a vertical axis (21), and comprising, at the ends of the free extremities of the arms (24,25) of the U, receiving means (30) for receiving said projections (46),
and **in that** said projections (46) are adapted to be received in said receiving means (30) and are provided at the level of the articulation sides of the food holder (32).

2. Barbecue according to claim 1, **characterized in that** it comprises a first housing part (1) consisting of:
• two longitudinal walls (5,6) perpendicular to said reference plane (P),
• two transverse walls (7,8) parallel to said reference plane (P) and occupying respectively a distal position and a proximal position with respect to this plane, and
• a horizontal bottom wall (4) consisting of at least one rail (13,14) perpendicular to said reference plane (P) and on which said block (15) slides.

3. Barbecue according to claim 2, **characterized in that** it consists of a rod (22) mounted so as to be able to rotate between, on the one hand, said distal transverse wall (7) which forms a guiding means and, on the other hand, a movement transmission means depending on said yoke (20), such that the rotation of the rod (22) about its longitudinal axis causes said yoke (20) to rotate about said vertical axis (21).

4. Barbecue according to claim 2 or 3, **characterized in that** it consists of a traction means (16) interlocked with said block (15) and sliding through drilled holes which affect said distal transverse wall (7) and guide said traction means (16).

5. Barbecue according to any of claims 1 to 4, **characterized in that** said tray (31) has, on the external face of its bottom wall, reliefs making it possible to prop up said tray on the bore (27) of said yoke (20).

6. Barbecue according to any of the preceding claims, **characterized in that** at least one of said walls forming a grate (34) consists of a frame (36) on which are mounted spring-loaded deformable elements (38).

7. Barbecue according to any of the preceding claims, **characterized in that** the projections (46) which said food holder (32) has at the level of the articulation sides belong to one (34) of the two walls forming grates, the projections (46) extending in the plane of said wall (34) and consisting of a first part (50) perpendicular to the articulation side and a second part (51) parallel to the articulation side and projecting towards the outside, and **in that** said receiving means (30) of said yoke (20) have a configuration which enables:
either, by deep engagement of said projections (46) into said receiving means (30), the immobilization, in a vertical position, of the food holder (32) in the closed position or of one (33) of said two walls of the food holder in the open position,
or, by partial engagement of said projections (46) into said receiving means and pivoting about said second part (51) of the projections (46), the pivoting, from the vertical to the horizontal, of the other (34) of said two walls of the food holder into the open position, and the pivoting from the horizontal to the vertical, and vice versa, of said food holder (32) into the closed position.

8. Barbecue according to any of claims 2 to 7, **characterized in that** it consists of a second housing part (2) consisting of a bottom wall (9), two longitudinal walls (10,11) perpendicular to the reference plane (P) and a higher transverse wall (12) perpendicular to said reference plane, said second housing part (2) being such that, at least in the use position:
• said bottom wall (9) is vertical and in the same plane as the distal transverse wall (7) of the first part of the housing (1); and
• said two longitudinal walls (10,11) are in the same plane respectively as the longitudinal walls (5,6) of said first housing part (1),
said heating means (3) being mounted in said second housing part (2).

9. Barbecue according to any of the preceding claims, **characterized in that** said heating means (3) is an electrical resistor.
